Europäisches Patentamt

European Patent Office

Office européen des brevets

(11) Veröffentlichungsnummer: **0 274 057 B1**

# (12) EUROPÄISCHE PATENTSCHRIFT

(45) Veröffentlichungstag der Patentschrift: 08.05.91

(51) Int. Cl.⁵: **B25J 19/06**

(21) Anmeldenummer: 87117717.6

(22) Anmeldetag: 30.11.87

(54) Sicherheitskupplung für einen Roboter.

(30) Priorität: 09.12.86 DE 3641919

(43) Veröffentlichungstag der Anmeldung:
13.07.88 Patentblatt 88/28

(45) Bekanntmachung des Hinweises auf die
Patenterteilung:
08.05.91 Patentblatt 91/19

(84) Benannte Vertragsstaaten:
CH DE FR GB IT LI SE

(56) Entgegenhaltungen:
GB-A- 2 058 714
US-A- 4 500 065

(73) Patentinhaber: Siemens Aktiengesellschaft
Wittelsbacherplatz 2
W-8000 München 2(DE)

(72) Erfinder: Berner, Klaus, Dipl.-Ing.
Bachstrasse 15
W-6838 Reilingen(DE)

**Beschreibung**

Die Erfindung bezieht sich auf eine Kupplung zum Befestigen eines Werkzeuges an einem Betätigungsarm eines Handhabungsroboters, wobei die Kupplung aus zwei in axialer Richtung durch Federn gegeneinander verspannten Kupplungsteilen besteht.

Eine derartige Kupplung ist z.B. durch die DE-A- 32 41 132 bekannt geworden. Die beiden Kupplungsteile sind mit dem Roboterarm bzw. mit dem Werkzeug oder dem Werkzeughalter verschraubbar. Zwischen den beiden mittels Haltebolzen zusammengehaltenen Kupplungsteilen ist eine Axialdruckfeder eingespannt. Beim Auftreten eines Kippmomentes, das über die Wirkung der Federvorspannung hinausgeht, wird die Feder einseitig zusammengedrückt, so daß die Werkzeugachse gegenüber der Achse des Roboterarmes abgeknickt werden kann. Beim Auftreten von die Vorspannung übersteigenden Druckkräften werden die beiden Kupplungsteile zusammengedrückt. Ein interner Sensor bewirkt ab einer eingestellten Auslenkung den Stillstand des Roboters. Nach dem Entlasten des Werkzeuges stellt sich dieses in seine Ausgangslage zurück.

Ferner ist durch die US-A- 4 500 065 eine Kupplung bekannt, bei der ein erstes Kupplungsteil mit radial federnden Druckstiften versehen ist, die in entsprechende konische Vertiefungen des zweiten Kupplungsteils eingreifen. Beim Auftreten einer Überlast werden die Druckstifte aus den Vertiefungen herausgedrückt, so daß die mechanischen Verbindungen zwischen den beiden Kupplungsteilen vollständig gelöst wird, was zum Abschalten des Roboters führt.

Der Erfindung liegt die Aufgabe zugrunde, eine Kupplung von geringer Bauhöhe zu schaffen, bei der die beiden Kupplungsteile mit geringem Kraftanstieg gegeneinander großhubig federnd auslenkbar sind.

Diese Aufgabe wird durch die Erfindung gemäß Anspruch 1 gelöst. Durch die transversale Anordnung der Torsionsfeder kann der Abstand zwischen den beiden Kupplungsteilen sehr klein gehalten werden, was eine geringe Bauhöhe ermöglicht. Die Torsionsfeder kann, ohne die Bauhöhe zu verändern, so viele Kicklungen aufweisen, daß das Torsionsmoment auch bei einer größeren Auslenkung nur wenig zunimmt. Das bedeutet, daß beim Zusammendrücken der Kupplung die Druckkraft über die eingestellte Vorspannung hinaus sehr flach ansteigt. Dies ist insbesondere für durch den Greifer auszuführende Montagevorgänge von Vorteil, bei denen die Fügekraft begrenzt sein soll. Dabei begünstigt die im wesentlichen transversale Anordnung des Druckarmes die niedrige Bauweise.

Vorteilhafte Weiterbildungen der Erfindung sind in den Ansprüchen 2 bis 7 gekennzeichnet:

Die Weiterbildung nach Anspruch 2 stellt eine konstruktiv einfache Lösung dar, wobei durch die Biegefähigkeit des Druckarmes die Nachgiebigkeit der Feder noch weiter erhöht wird.

Durch die Weiterbildung nach Anspruch 3 können die beiden Kupplungsteile auch bei großer Auslenkung genau geführt werden.

Beim Zusammendrücken der beiden Kupplungsteile entsteht im Druckarm eine Schubkraft, die durch den Gleitwiderstand gegenüber dem zweiten Kupplungsteil bzw. durch die Nachgiebigkeit der Torsionsfeder begrenzt ist. Diese Schubkraft bewirkt eine transversale Kraftkomponente zwischen den beiden Kupplungsteilen. Diese wird durch die Weiterbildung nach Anspruch 4 ausgeglichen.

Durch die Weiterbildung nach Anspruch 5 wird die Schubkraft und damit die Hysterese in der Kraft-Weg-Beziehung noch weiter verringert. Das Gleitstück kann aus besonders günstigem Gleitmaterial wie Kunststoff bestehen und zur Sicherung definierter Beziehungen nach Anspruch 6 in einer Führungsnut des zweiten Kupplungsteiles geführt sein.

Durch die Weiterbildung nach Anspruch 7 wird die Beweglichkeit der Anordnung noch weiter erhöht und der Verschleiß verringert.

Im folgenden wird die Erfindung anhand eines in der Zeichnung dargestellten Ausführungsbeispieles näher erläutert.

Es zeigen

Fig. 1    eine Seitenansicht einer Sicherheitskupplung für einen Robotergreifer mit einem Teilschnitt entlang der Linie I-I in Fig. 2,

Fig. 2    eine Draufsicht auf die Kupplung nach Fig. 1,

Fig. 3    einen Schnitt durch die Kupplung entlang der Linie III-III in Fig. 1.

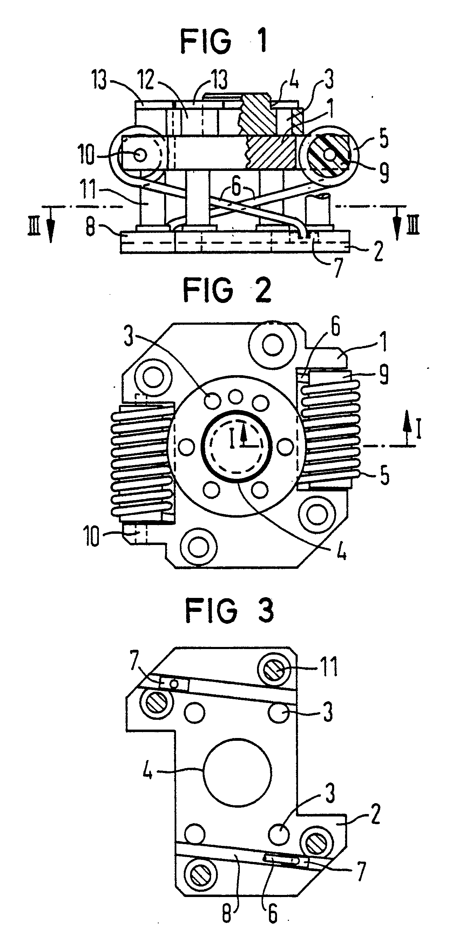

Nach den Fig. 1, 2 und 3 besteht eine Kupplung aus einem ersten Kupplungsteil 1 und einem zweiten Kupplungsteil 2, die mit Befestigungslöchern 3 für den Roboterarm bzw. dem Greifer versehen sind. Zentrale Zentrieransätze 4 an den beiden Kupplungsteilen 2 und 3 ermöglichen die genaue Lagesicherung zum Greifer bzw. Roboterarm.

Das erste Kupplungsteil 1 ist mit zwei flachliegenden drehsymmetrisch angeordneten Torsionsfedern 5 versehen, von denen aus ein als Verlängerung des Federdrahtes ausgebildeter Druckarm schräg zum zweiten Kupplungsteil 2 hin absteht. Dieser stützt sich mit seinem in Achsrichtung abgebogenen Ende in einer Vertiefung eines Gleitstückes 7 ab, das in einer Führungsnut 8 des zweiten Kupplungsteiles 2 verschiebbar ist. Die Führungsnut 8 erstreckt sich in der Projektionsrichtung des Druckarmes 6, so daß beim Zusammendrücken der beiden Kupplungsteile 1 und 2 das Druckarmende an dem zweiten Kupplungsteil 2 ausweichen kann. Die Torsionsfedern 5 sind auf Kunststoffrollen 9 gelagert, die auf einer dünnen Achse 10 leichtgängig verdrehbar sind.

Im zweiten Kupplungsteil sind koaxiale Führungssäulen 11 befestigt, die in Führungsbuchsen 12 des ersten Kupplungsteiles 1 geführt sind. Anschlagscheiben 13, die an den Führungssäulen 11 befestigt sind, sichern die Ausgangslage der beiden Kupplungsteile zueinander. Beim Zusammendrücken sind die beiden Kupplungsteile 1 und 2 axial genau zueinander geführt. Dadurch eignet sich die Kupplung insbesondere zur Ausführung von Montagevorgängen, bei denen die Fügekraft begrenzt sein soll. Die Kupplung kann außerdem mit einem Wegdetektor versehen werden, der mit der Robotersteuerung in Verbindung steht und bei Überschreitung einer bestimmten Auslenkung ein Abschalten der Roboterbewegung bewirkt.

**Ansprüche**

1.  Kupplung zum Befestigen eines Werkzeuges, insbesondere eines Greifers an einem Betätigungsarm eines Handhabungsroboters, wobei die Kupplung zwei flanschartige Kupplungsteile (1, 2) aufweist, die zum Schutz gegen Überlastung durch axiale Druckkräfte und/oder Kippmomente unter axialer Federspannung gegeneinander verspannt und auslenkbar sind, **dadurch gekennzeichnet,** daß zumindest eine transversal zur Kupplungsachse liegende Torsionsfeder (5) mit einem Ende an einem ersten der beiden Kupplungsteile (1) befestigt ist, daß das andere verdrehbare Ende der Torsionsfeder fest mit einem schwenkbaren Druckarm (6) verbunden ist, der sich im wesentlichen transversal zur Kupplungsachse und zur Drehachse der Torsionsfeder (6) erstreckt, und daß das freie Ende des Druckarms (6) in der Achsrichtung der Kupplung auslenkbar ist und gegen ein zweites der beiden Kupplungsteile (2) gedrückt ist.

2.  Kupplung nach Anspruch 1, **dadurch gekennzeichnet,** daß der Druckarm (6) einstückig mit der Torsionsfeder (5) verbunden und als geradlinige Verlängerung des Federdrahtes ausgebildet ist.

3.  Kupplung nach Anspruch 1 oder 2, **dadurch gekennzeichnet,** daß die beiden Kupplungsteile (1, 2) wechselweise mit koaxialen Führungsbuchsen (12) und in diesen geführten Führungssäulen (11) versehen sind.

4.  Kupplung nach Anspruch 1, 2 oder 3, **dadurch gekennzeichnet,** daß mehrere Torsionsfedern (5) mit den Druckarmen (6) zur Kupplungsachse drehsymmetrisch angeordnet sind.

5.  Kupplung nach einem der vorhergehenden Ansprüche, **dadurch gekennzeichnet,** daß sich das freie Ende des Druckarmes (6) an einem Gleitstück (7) abstützt, das am zweiten Kupplungsteil (2) verschiebbar ist.

6.  Kupplung nach Anspruch 5, **dadurch gekennzeichnet,** daß das Gleitstück (7) in einer Führungsnut (8) des zweiten Kupplungsteiles (2) verschiebbar ist.

7.  Kupplung nach einem der vorhergehenden Ansprüche, **dadurch gekennzeichnet,** daß die Torsionsfeder (5) auf einer Kunststoffrolle (9) gelagert ist, die um eine erheblich dünnere Achse (10) des ersten Kupplungsteiles (1) drehbar ist.

**Claims**

1.  coupling for fastening a tool, in particular a gripper, to an actuating arm of a manipulating robot, the coupling having two flange-like coupling parts (1, 2) which, for protection against overload through axial pressure forces and/or tilting moments, are restrained against one another and can be deflected under axial spring loading, characterised in that at least one torsion spring (5) disposed transversely to the coupling axis is fastened with one end to a first coupling part (1) of the two coupling parts, in that the other rotatable end of the torsion spring is firmly connected to a pivotable pressure arm (6) which extends essentially transversely to the coupling axis and to the axis of rotation of the torsion spring (5), and in that the free end of the pressure arm (6) can be deflected in the axial direction of the coupling and pressed against a second coupling part (2) of the two coupling parts.

2.  Coupling according to Claim 1, characterised in that the pressure arm (6) is connected in one piece with the torsion spring (5) and is designed as a rectilinear extension of the spring wire.

3.  Coupling according to Claim 1 or 2, characterised in that the two coupling parts (1, 2) are alternately provided with coaxial guide bushes (12) and guide columns (11) guided in the same.

4. Coupling according to Claim 1, 2 or 3, characterised in that a plurality of torsion springs (5) having the pressure arms (6) are arranged to be rotationally symmetric to the coupling axis.

5. Coupling according to one of the preceding claims, characterised in that the free end of the pressure arm (6) is supported on a slider (7) which is displaceable on the second coupling part (2).

6. Coupling according to Claim 5, characterised in that the slider (7) is displaceable in a guide groove (8) of the second coupling part (2).

7. Coupling according to one of the preceding claims, characterised in that the torsion spring (5) is mounted on a plastic roller (9) which is rotatable on a considerably thinner spindle (10) of the first coupling part (1).

**Revendications**

1. Accouplement servant à fixer un outil, notamment une pince sur un bras d'actionnement d'un robot de manipulation, l'accouplement comportant deux éléments d'accouplement en forme de brides (1,2), qui peuvent être serrées l'une contre l'autre et écartées l'une de l'autre au moyen de forces axiales de serrage et/ou de moments de basculement sous l'action de la contrainte axiale d'un ressort, afin de réaliser une protection vis-à-vis d'une surcharge, caractérisé par le fait qu'au moins un ressort de torsion (5), disposé transversalement par rapport à l'axe d'accouplement, est fixé par une extrémité à un premier des deux éléments d'accouplement (1), que l'autre extrémité, pouvant tourner, du ressort de torsion est raccordée rigidement à un bras de serrage pivotant (6), qui est sensiblement transversal par rapport à l'axe d'accouplement et à l'axe de rotation du ressort de torsion (6), et que l'extrémité libre du bras de serrage 6) peut être orientée dans la direction de l'axe de l'accouplement et être serrée contre un second des deux éléments d'accouplement (2).

2. Accouplement suivant la revendication 1, caractérisé par le fait que le bras de serrage (6) est raccordé d'un seul tenant au ressort de torsion (5) et est agencé sous la forme d'un prolongement rectiligne du fil du ressort.

3. Accouplement suivant la revendication 1 ou 2, caractérisé par le fait que les deux éléments d'accouplement (1,2) sont pourvus alternativement de douilles coaxiales de guidage (12) et de colonnes de guidage (11) guidés dans ces douilles.

4. Accouplement suivant la revendication 1,2 ou 3, caractérisé par le fait que plusieurs ressorts de torsion (5) pourvus des bras de serrage (6) sont disposés symétriquement et selon une symétrie de révolution, par rapport à l'axe de l'accouplement.

5. Accouplement suivant l'une des revendications précédentes, caractérisé par le fait que l'extrémité libre du bras de serrage (6) prend appui sur un coulisseau (7), déplaçable dans le second élément d' accouplement (2).

6. Accouplement suivant la revendication 5, caractérisé par le fait que le coulisseau (7) est déplaçable dans une rainure de guidage (8) du second élément d'accouplement (2).

7. Accouplement suivant l'une des revendications précédentes, caractérisé par le fait que le ressort de torsion (5) est monté sur un cylindre en matière plastique (9), qui peut pivoter autour d'un axe nettement plus mince (10) du premier élément d'accouplement (1).

## FIG 1

## FIG 2

## FIG 3